# EUROPÄISCHE PATENTSCHRIFT

(11) **EP 2 609 041 B1**
(45) Veröffentlichungstag und Bekanntmachung des Hinweises auf die Patenterteilung: **27.05.2015**
(21) Anmeldenummer: 11764673.7
(22) Anmeldetag: 22.08.2011
(51) Int. Cl.: C02F 1/78, B01F 5/06, C02F 1/32, C02F 103/00, C02F 101/12

(54) **VORRICHTUNG UND VERFAHREN ZUR BEHANDLUNG VON FLÜSSIGKEITEN MITTELS OZON**
DEVICE AND METHOD FOR TREATING LIQUIDS USING OZONE
DISPOSITIF ET PROCÉDÉ POUR LE TRAITEMENT DE LIQUIDES AU MOYEN D'OZONE

(30) Priorität: 25.08.2010 DE 102010035519
(43) Veröffentlichungstag der Anmeldung: 03.07.2013
(73) Patentinhaber: Xylem IP Holdings LLC, White Plains, NY 10604 (US)
(72) Erfinder: WIELAND, Arne, 32427 Minden (DE); KAMPMANN, Martin, 60322 Frankfurt/Main (DE); SCHEIDELER, Jens, 33758 Schloss-Holte (DE); RIED, Achim, 32549 Bad Oeynhausen (DE)
(74) Vertreter: Lenzing, Andreas
(86) Internationale Anmeldenummer: PCT/EP2011/004210
(87) Internationale Veröffentlichungsnummer: WO 2012/025214

(56) Entgegenhaltungen:
- CN-A- 101 549 900
- KR-B1- 100 802 889
- US-A- 6 024 882
- US-A1- 2004 099 608
- US-A1- 2006 021 951
- US-A1- 2008 290 045

## Beschreibung

Die vorliegende Erfindung betrifft eine Vorrichtung zur Behandlung von Flüssigkeiten mittels Ozon mit den Merkmalen des Oberbegriffs des Anspruchs 1 sowie ein Verfahren zur Behandlung von Flüssigkeiten mittels Ozon mit den Merkmalen des Oberbegriffs des Anspruchs 10.

An die Qualität von Trinkwasser und Brauchwasser werden zunehmend höhere Anforderungen gestellt. Kontaminationen mit organischen Stoffen werden zunehmend als gesundheitsschädlich erkannt, so dass eine Entfernung notwendig wird. Andererseits gelangen immer mehr derartige Stoffe in das Grundwasser und in Oberflächenwässer. Ein Beispiel hierfür ist die zunehmende Konzentration von Arzneimittelrückständen in Oberflächenwässern.

Solche Kontaminationen werden mit verschiedenen Mitteln reduziert. Eines dieser Mittel ist die Oxidation von organischen Kontaminationen. Diese ist besonders wirksam in dem sogenannten "Advanced oxidation process" (AOP) realisiert, in dem Ozon und Wasserstoffperoxid in das Kontaminierte Wasser eingeleitet werden, die dann miteinander zu einem Hydroxyl-Radikal reagieren. Dieses Hydroxyl-Radikal stellt ein sehr wirksames Oxidationsmittel dar.

Aus der Druckschrift US 5 578 205 ist es bekannt, einen Strom von belasteten Wasser zunächst Wasserstoffperoxid zuzusetzen und dann stromabwärts in einem einzigen Schritt Ozon zu indizieren. Auf diese Weise werden Verunreinigungen in dem behandelten Wasser zumindest teilweise abgebaut. Die Druckschrift EP 0 561 458 A1 beschreibt ein Verfahren zur Behandlung von kontaminiertem Wasser, bei dem zunächst Sauerstoff und Ozon in einem Reaktionsbehälter unter hohen Druck in das Wasser eingetragen werden. Wasserstoffperoxid kann dann später in einem separaten Reaktionsbehälter stromabwärts der Ozoneintragsstelle zugesetzt werden. Die Druckschrift EP 1 021 377 B1 beschreibt ein Verfahren zur Behandlung von kontaminiertem Wasser, bei dem Ozon und Wasserstoffperoxid direkt in den Hauptwasserstrom eingetragen werden und beide Substanzen dann gleichzeitig in einer hochwirksamen Mischvorrichtung innerhalb weniger Sekunden vollständig in dem Wasser gelöst und verteilt werden. Auf diese Weise soll die Bildung von Bromat verhindert werden. Bromat ist verdächtig, karzinogene Wirkung aufzuweisen. Es gibt deshalb eine Obergrenze für den zulässigen Bromatgehalt in Trinkwasser. Das genannte Verfahren soll die Bildung von Bromat bei Vorhandensein von Bromid-Ionen in dem zu behandelnden Wasser minimieren.

Die Druckschrift US 7 595 003 B2 beschreibt ein Verfahren zur Desinfektion von Ballastwasser an Bord von Schiffen mittels Ozon. Zur Vermeidung hoher Bromatkonzentrationen werden die Konzentrationen von Bromid und Bromat überwacht und die Injektion von Ozon wird danach gesteuert.

Aufgabe der vorliegenden Erfindung ist es, die Bildung von Bromat in Wasser, welches Bromid-Ionen enthält und mit Ozon behandelt wird, weiter zu minimieren.

Diese Aufgabe wird von einem Verfahren und einer Vorrichtung mit den Merkmalen der unabhängigen Patentansprüche gelöst.

Weil die Eintragvorrichtung die Einspeisung von Ozon in den Wasserstrom an genau einer Stelle vorsieht und weil stromabwärts der Einspeisestelle mehrere Mischer zur Einmischung des Ozons in das Wasser vorgesehen sind, wobei die Mischer in einem Abstand voneinander angeordnet sind, so dass sich zwischen den Mischern wenigstens eine Reaktionszone, in der das gelöste Ozon mit den in der Flüssigkeit befindlichen Kontaminationen reagieren kann, ausbildet, wobei der Abstand zwischen den Mischern und die Fließgeschwindigkeit der Flüssigkeit so gewählt sind, dass die Verweilzeit für ein Wasservolumen zwischen dem Austritt aus einem Mischer und dem eintritt in den nachfolgenden Mischer zwischen 0,5 Sekunden und 30 Sekunden in einer der Reaktionszonen beträgt, wird dass Ozon stufenweise in den Wasserstrom eingemischt, so dass sich die absolute Menge des eingetragenen Ozons in dem Wasser mit jeder Mischstufe erhöht. Auf diese Weise wird verhindert, dass es zu hohen lokalen gelösten Ozonkonzentrationen kommt, die zu einer Bildung von Bromat führen würden.

Es kann vorgesehen sein, dass die Mischer jeweils statische Mischer ohne bewegliche Teile sind.

Die Dimensionierung der Eintragvorrichtung sieht vorzugsweise vor, dass der Abstand zwischen den Mischern und die Fließgeschwindigkeit des Wassers so gewählt werden, dass ein Wasservolumen zwischen dem Austritt aus einem Mischer und dem Eintritt in den nachfolgenden Mischer zwischen zwischen 1 und 10 Sekunden, benötigt.

In einer bevorzugten Ausführungsform ist das Eintragsystem in einem Rohr angeordnet, das mehrere gerade Teilstücke und dazwischen angeordnete U-förmige Verbindungsstücke aufweist. Im Zusammenhang der nachfolgenden Beschreibung wird diese Bauweise vereinfachend als "schlaufenartig gefaltetes Rohr" bezeichnet.

Für AOP-Prozesse kann vorgesehen sein, dass stromaufwärts der Ozoneinspeisestelle eine Einspeisung von Wasserstoffperoxid oder anderen Reagenzien vorgesehen ist.

Schließlich kann die Vorrichtung so ausgebildet sein, dass zwischen zwei Mischern oder nach dem letzten Mischer die Einstrahlung von elektromagnetischen Wellen, insbesondere von UV-Strahlung vorgesehen ist.

Nachfolgend werden Ausführungsbeispiele der vorliegenden Erfindung anhand der Zeichnung näher beschrieben. Es zeigen:
- Figur 1:: Ein erfindungsgemäßes Eintragsystem in horizontaler bzw. vertikaler, linearer Ausbildung in einer schematischen Darstellung;
- Figur 2:: einen Platz sparenden Aufbau eines erfindungsgemäßen Eintragsystems in Schlaufenanordnung;
- Figur 3:: ein Eintragsystem mit einer schematisch dargestellten Bestrahlungseinheit; sowie
- Figur 4:: den Verlauf der Eintragseffizienz des Ozons über die Länge des Eintragsystem aus Figur 1.

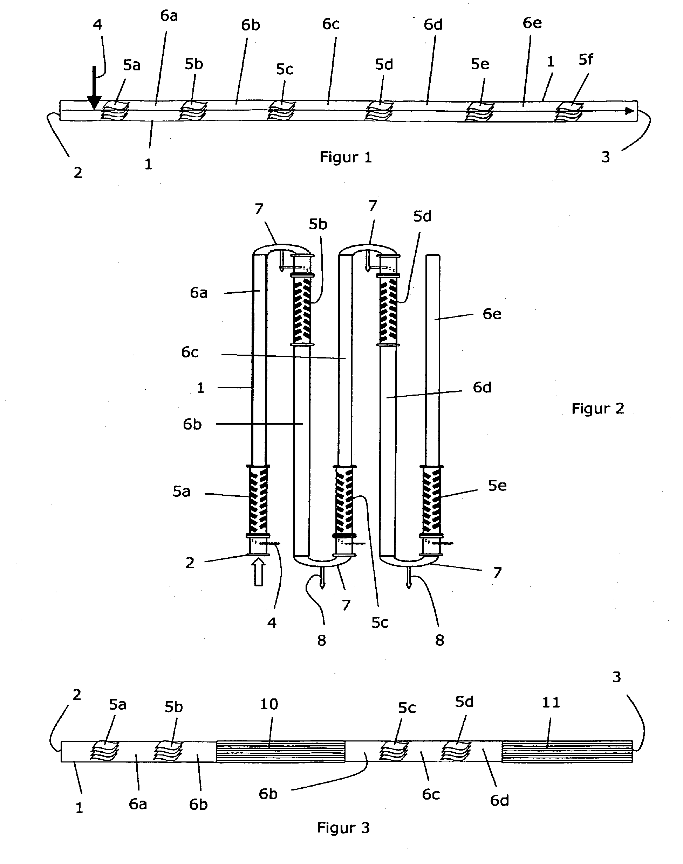

In der Figur 1 ist ein Eintragsystem für gasförmiges Ozon in dem Strom von kontaminiertem Wasser schematisch dargestellt. Das Eintragsystem ist in einem Rohr 1 zwischen einem Zulauf 2 und einem Ablauf 3 angeordnet. Das Rohr 1 ist in bekannter Weise aus einem Material gefertigt, der von Oxidationsmitteln nicht angegriffen wird (z.B. Edelstahl oder PVC). Die vor dem Zulauf 2 und hinter dem Ablauf 3 liegenden Installationen sind aus dem Stand der Technik bekannt. Es handelt sich um die üblichen Installationen eines Wasserwerks oder einer Wasseraufbereitungsanlage. Die Anordnung des in Figur 1 dargestellten Eintragssystems kann in horizontaler und vertikaler Ausrichtung erfolgen.

Die Stromrichtung verläuft in der Figur 1 von links nach rechts, also von dem Zulauf 2 zu dem Ablauf 3. Unmittelbar benachbart zu dem Zulauf 2 ist ein schematisch dargestellter Ozoneinspeisepunkt 4 vorgesehen, der als Düsenlanze, Impfbiene oder als keramisches Eintrittselement ausgebildet und in dem Hauptstrom des Wassers angeordnet ist.

Stromabwärts des Ozoneinspeisepunkts 4 ist ein erster Mischer 5a angeordnet. Es handelt sich bevorzugt um einen sogenannten statischen Mischer, der ohne beweglich Komponenten arbeitet und allein auf Grund der Turbulenzbildung das zunächst gasförmige Ozon in innigen Kontakt mit dem strömenden Wasser bringt und dadurch bewirkt, dass ein Teil des gasförmigen Ozons in Lösung geht. Der Mischer 5a ist so ausgebildet, dass das eingetragene Ozon nicht vollständig gelöst wird, sondern zunächst nur zu einem Bruchteil von etwa 20 bis 30 %. Es verbleiben also 70 bis 80 % des gasförmigen Ozons ungelöst in dem Hauptstrom des zu behandelnden Wassers innerhalb des Rohrs 1. Stromabwärts des ersten Mischers 5a ist einer erste Reaktionszone 6a vorgesehen. In dieser Reaktionszone strömt das Wasser mit dem teilweise gelösten Ozon im Wesentlichen ungestört für eine Zeit zwischen 0,5 Sekunden und etwa 30 Sekunden, bevorzugt jedoch zwischen 1 und 10 Sekunden, durch das Rohr 1. Dann wird ein stromabwärts liegender zweiter Mischer 5b erreicht, der wiederum etwa 20 % des gasförmigen Ozons in Lösung bringt. Hinter dem zweiten Mischer 5b ist eine zweite Reaktionszone 6b angeordnet, in der wiederum etwa 50 % gasförmiges Ozon mit dem Hauptstrom transportiert werden, während das gelöste Ozon mit dem in dem Wasser befindlichen Kontaminationen reagieren kann. Die Verweilzeit in der zweiten Reaktionszone 6b beträgt wiederum zwischen 0,5 Sekunden und etwa 30 Sekunden, bevorzugt jedoch zwischen 1 und 10 Sekunden. Stromabwärts der Reaktionszone 6b ist ein dritter Mischer 5c vorgesehen, der wie der erste Mischer 5a und der zweite Mischer 5b arbeitet. Auf dem dritten Mischer 5c folgt eine dritte Reaktionszone 6c, darauf ein vierter Mischer 5d und eine vierte Reaktionszone 6d, ein fünfter Mischer 5e und eine fünfte Reaktionszone 6e sowie ein letzter sechster Mischer 5f, der unmittelbar vor dem Auslauf 3 angeordnet ist.

Bei diesem Ausführungsbeispiel sind die Mischer 5a bis 5f und die Reaktionszonen 6a bis 6e gleich aufgebaut und dimensioniert. Es wird also ausgehend von dem Einlauf 2 zunächst bei dem Ozoneinspeisepunkt 4 die vollständige Ozonmenge gasförmig zugegeben. Die Mischer 5a bis 5f mischen beim Passieren des Hauptstroms das gasförmige Ozon jeweils so in den Hauptstrom, dass es teilweise in Lösung geht. In der nachfolgenden Reaktionszone 6a bis 6e kann dann das gelöste Ozon mit den oxidierbaren Kontaminationen abreagieren.

Die Mischelemente sind in bekannter Weise aus einem Material gefertigt, das von Oxidationsmitteln nicht angegriffen wird (z.B. Edelstahl oder PVC). Die Anzahl der Mischelemente kann der spezifischen Aufgabenstellung angepasst werden, sollte jedoch die Anzahl von zwei Mischelementen nicht unterschreiten.

Die Ausbildung und die Anordnung der Mischer und der Reaktionszonen bewirkt, dass die Konzentration an gelöstem Ozon von Reaktionszone zu Reaktionszone nur leicht ansteigt. Dieser schonende Eintrag des Ozons verhindert lokale hohe gelöste Ozonkonzentrationen und verhindert so die Bildung von Bromat.

Dem Hauptstrom des zu behandelnden Wassers kann vor dem Zulauf 2 auch noch eine andere für den Schadstoffabbau geeignete Substanz zugegeben werden, beispielsweise Wasserstoffperoxid. Auch hier stellt sich der Effekt ein, dass das Ozon hinter dem ersten Mischer noch zum großen Teil gasförmig vorliegt und nicht mit diesen Stoffen reagieren wird. Im Falle der Zugabe von Wasserstoffperoxyd führt dies dazu, dass nicht sofort die vollständig mögliche Menge an Hydroxyl-Radikalen gebildet wird, sondern dass die absolute Menge der Hydroxyl-Radikale mit Passieren jeder weiteren Reaktionszone ansteigen wird.

Ebenso besteht die Möglichkeit, dass das Wasserstoffperoxid nicht stromaufwärts des Ozoneinspeisepunktes, sondern nach der ersten Reaktionszone 6a in den Wasserstrom eingegeben wird. Die Mischung des Wasserstoffperoxids erfolgt dann über den Mischer 5b. Durch diese Betriebsweise ergibt sich der Vorteil, dass Substanzen, die direkt mit Ozon reagieren, bereits in der ersten Reaktionszone 6a abgebaut worden sind. Dies geschieht durch die nach dem ersten Mischer 5a auftretende hohe lokale Ozonkonzentration durch das teilweise Einmischen von gasförmigem Ozon. Die Reaktionszone 6a kann so dimensioniert werden, dass alle Stoffe, die direkt mit Ozon reagieren bis zum Mischer 5b abgebaut werden und die Menge an gelöstem Ozon nicht mehr nachweisbar ist. Stoffe, die mit Hydroxyl-Radikalen reagieren, werden dann in den nachfolgenden Reaktionszonen abgebaut.

Der zeitliche Verlauf der Ozonkonzentration in gelöster Form und die Abfolge der Reaktionszonen in denen das Ozon oder die Hydroxyl-Radikale mit den im Wasser enthaltenen oxidierbaren Substanzen abreagieren bewirkt, dass besonders niedrige Erzeugungsraten für unerwünschte Oxidationsnebenprodukte, insbesondere für Bromat, erzielt werden. Bei Systemen, in denen Ozon bereits in einem ersten, hochwirksamen Mischer vollständig in Lösung gebracht wird, ist die Bromatbildung größer.

Ein weiteres Ausführungsbeispiel der vorliegenden Erfindung ist in der Figur 2 veranschaulicht. Hier ist das Rohr 1 zwischen dem Zulauf 2 und dem Ablauf 3 gefaltet. Nach dem Zulauf ist die Ozoneinspeisevorrichtung 4 vorgesehen. Danach folgen in Stromrichtung der erste Mischer 5a und die erste Reaktionszone 6a. Ein Rohrbogen 7 lenkt den Hauptstrom um 180° in die entgegengesetzte Richtung um. Der Hauptstrom tritt dann in den zweiten Mischer 5b und die zweite Reaktionszone 6b ein. Daran schließt wiederum ein Rohrbogen 7 an, der in eine Richtung parallel zum ursprünglich eintretenden Hauptstrom umlenkt. Es folgen der dritte Mischer 5c und die dritte Reaktionszone 6c. Daran schließt wiederum ein Rohrbogen 7 an, der zu dem vierten Mischer 5d und der vierten Reaktionszone 6d führt. Schließlich ist ein letzter Rohrbogen 7 vorgesehen, der zu dem fünften Mischer 5e und der fünften Reaktionszone 6e führt. Diese mündet schließlich in den Auslauf 3. Es ergibt sich für die Wasserbehandlung etwa der gleiche Aufbau und die gleiche Wirkungsweise wie bei dem Ausführungsbeispiel in Figur 1. Durch die Faltung wird jedoch ein sogenannter Schlaufenreaktor gebildet, der wesentlich kompakter angeordnet ist. Der Schlaufenreaktor nach Fig. 2 kann horizontal oder vertikal angeordnet sein. Dabei kann das Teilstück des Rohrs 1, in dem der erste Mischer 5a, die erste Reaktionszone 6a und der Ozoneinspeisepunkt 4 angeordnet sind, entweder mit der Hauptstromrichtung nach oben ausgerichtet sein, so dass das gasförmige Ozon mit der Hauptstromrichtung durch den Auftrieb der Gasblasen aufsteigt und im Gleichstrom bewegt wird. Wenn das erste Teilstück mit der Hauptstromrichtung nach unten verläuft, nimmt die Hauptstromrichtung die Ozongasblasen mit, die Richtung des Auftriebs ist jedoch der Hauptstromrichtung dann entgegengerichtet, so dass die Wanderungsgeschwindigkeit der Ozonbläschen verringert und die Verweilzeit des gasförmigen Ozons in diesem Bereich erhöht wird.

Die Figur 3 zeigt ein anders Ausführungsbeispiel, beim dem zusätzlich zu der oben beschriebenen Oxidation ein erster Bestrahlungsbereich 10 und ein zweiter Bestrahlungsbereich 11 vorgesehen sind. Die Bestrahlungsbereiche 10 und 11 dienen zum Eintrag von elektromagnetischer Strahlung in den Hauptstrom des zu behandelnden Wassers, und zwar im Bereich zwischen den Mischern 5b und 5c, welcher die zweite Reaktionszone 6b darstellt, sowie im Bereich zwischen den Mischern 5d und dem Auslauf 3. Dieser Bereich stellt die vierte Reaktionszone 6d in diesem Ausführungsbeispiel dar. Weiterhin ist es möglich, einen Bestrahlungsbereich nach der letzten Reaktionszone zu installieren.

In den Bereichen 10 und 11 kann in das Rohr 1 jeweils ein UV-Reaktor eingebaut sein, wie er beispielsweise aus der Trinkwasserdesinfektion bekannt ist. Ein solcher UV-Reaktor weist ein Edelstahlrohr auf, das mit entsprechenden Flanschen in eine bestehende Rohrleitung eingebaut wird. Im Innenraum des Reaktors sind dann ein oder mehrere UV-Strahler angeordnet, die die strömende Flüssigkeit mit UV-Strahlung einer definierten Dosis bestrahlen. Bevorzugt werden Quecksilber-Niederdruckstrahler oder Quecksilber-Mitteldruckstrahler eingesetzt.

Durch die Kombination der UV-Strahlung mit dem Oxidationsprozess ist es möglich, dass Schadstoffe, die als photo-sensitiv bezeichnet werden (z.B. NDMA), parallel zur Kombination Ozon + H₂O₂ eliminiert werden können. Durch die Bestrahlung von gelöstem Ozon mit UV-Strahlen können Hydroxyl-Radikale generiert werden. Dadurch ergibt sich der Vorteil, dass neben den Stoffen, die direkt mit Ozon reagieren oder als photo-sensitiv gelten, auch Stoffe reduziert werden, die nur durch Hydroxyl-Radikale reduziert werden können. Durch die Bestrahlung von gelöstem Wasserstoffperoxid mit UV-Strahlen können ebenfalls Hydroxyl-Radikale generiert werden. Dadurch ergibt sich der Vorteil, dass neben den Stoffen, die als photo-sensitiv gelten, auch Stoffe reduziert werden, die nur durch Hydroxyl-Radikale reduziert werden können. Diese Kombination gilt jedoch nur für niedrige spezifische Stoffkonzentrationen. Es besteht ebenso die Möglichkeit, dass die Ozonstufe, die Wasserstoffperoxid-Dosierung und die UV-Bestrahlung in einem Prozess parallel genutzt werden. Insgesamt ergibt sich durch diese Anordnungen der Vorteil, dass durch die verschiedenen Kombinationsmöglichkeiten im Betrieb des Systems auf variierende Stoffe und Stoffkonzentrationen reagiert werden kann. Dadurch wird ein effizienter Prozess geschaffen.

Für die drei beschriebenen Ausführungsbeispiele wird ein Mess- und Regelungssystem zur Steuerung des Systems vorgesehen. Dieses übergeordnete Steuerungssystem beinhaltet die Regelung der benötigten Ozonmenge, der benötigten Menge von Wasserstoffperoxid und die Messung der Konzentrationen von Ozon in der Gas- und Wasserphase sowie der Konzentration von Wasserstoffperoxid in der Wasserphase. Die Regelung der benötigten Ozonmenge erfolgt durch die Anpassung der Ozonkonzentration im Produktgas sowie die Anpassung des Produktgasflusses. Errechnet wird die benötigte Ozonmenge durch die Vorgabe der benötigten Ozondosis an der Steuerung und dem Volumenstrom des zu behandelnden Wassers. Die benötigte Menge an Wasserstoffperoxid erfolgt ebenfalls durch die Vorgabe der Wasserstoffperoxiddosis an der Steuerung und dem Volumenstrom des zu behandelnden Wassers. Durch diese Steuerungsweise können die benötigten Mengen an Ozon und Wasserstoffperoxid über die Steuerung des Systems an die zu behandelnde Wassermenge angepasst werden.

Die Bestimmung der im Wasser gelösten Menge an Ozon erfolgt durch ein geeignetes Messgerät. Die Messung kann entweder direkt nach jedem Mischer 5a bis 5f und jeder Reaktionszone 6a bis 6e erfolgen oder insgesamt am Ende der Misch- und Reaktionsstrecke. Die Bestimmung der gelösten Ozonmenge hat den Vorteil, dass durch diese Messung die benötigte Ozonmenge dem tatsächlichen Verbrauch an Ozon angepasst werden kann. Sollte die gelöste Menge an Ozon einen zu definierenden Wert überschreiten, kann entweder die Menge an produziertem Ozon reduziert werden, die Wasserstoffperoxiddosis erhöht werden oder die UV-Strahlung erhöht bzw. eingeschaltet werden. Die Messung am Ende der Misch- und Reaktionsstrecke dient dazu, dass kein gelöstes Ozon mehr im Prozess vorhanden sein sollte. Bei Überschreitung des zu definierenden Wertes kann auch über die Steuerung die benötigte Ozonmenge reduziert werden.

Die Bestimmung der Wasserstoffperoxid-Konzentration kann nach dem Einmischen in den Hauptstrom erfolgen und dient zur Überprüfung der tatsächlichen Wasserstoffperoxiddosis. Ebenso kann die Wasserstoffperoxid-Konzentration am Ende der Misch- und Reaktionsstrecke bestimmt werden, um die Effizienz des Prozesses ermitteln zu können.

Durch die Steuerung und die Bestimmung der oben angeführten Parameter kann das System eigenständig auf Änderung der Wassermenge und der Zusammensetzung des zu behandelnden Wassers reagieren. Dadurch wird ein effizienter Prozess geschaffen, bei dem nur die tatsächlich benötigten Mengen an Ozon und Wasserstoffperoxid eingetragen werden. Dadurch können die Betriebskosten reduziert werden.

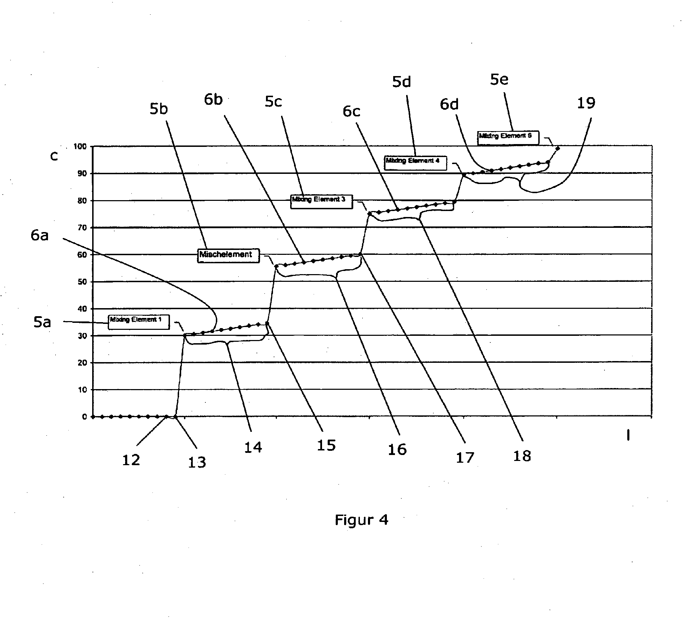

In der Figur 4 wird in einem schematischen Diagramm veranschaulicht, wie sich die Eintragseffizienz des Ozons über die Länge I des Rohrs 1 aus Figur 2 entwickelt. Ausgehend von der Länge 0, die mit dem Einlauf 2 zusammenfällt, ist die eingetragene Ozonmenge zunächst 0. Der Eintrag der vollständigen Menge gasförmigen Ozons am Ort des Einspeisepunkts 4 ist mit dem Messpunkt 12 gekennzeichnet. Vor Erreichen des ersten Mischers 5a wird so gut wie kein Ozon in die Wasserphase transferiert. Nach Passieren des ersten Mischers 5a, wird ca. 30% des gasförmigen Ozons in die Wasserphase transferiert und in der nachfolgenden Reaktionszone 6a, die in dem Diagramm mit dem Bereich 14 gekennzeichnet ist, erhöht sich der Wert auf etwa 35%, weil sich gasförmiges Ozon mit der Zeit auch ohne den Einfluss von Mischelementen in Wasser löst. Innerhalb der Reaktionszone 6a, kann das transferierte Ozon mit den im Wasser enthaltenen oxidierbaren Stoffen abreagieren, so dass vor Eintritt in das zweite Mischelement 5b ein Großteil des eingetragenen Ozons abreagiert hat. Nach Passieren des Mischers 5b steigt der Anteil des effektiv ins Wasser eingetragenen Ozons auf 55% an und erhöht sich in der nachfolgenden Reaktionszone 6b auf bis zu 60%. Innerhalb der Reaktionszone 6b reagiert wieder ein Großteil des eingetragenen Ozons mit den im Wasser enthaltenen Stoffen ab. Nach Passieren des Mischers 5c steigt der Anteil des transferierten Ozons auf 75% an und erhöht sich beim Passieren der Reaktionszone 18 auf etwa 80%. Nach Passieren des Mischelements 5d und der Reaktionszone 6d beträgt der Anteil des effektiv eingetragenen Ozons etwa 95%. Am Durchtritt durch den fünften Mischer 5e wird schließlich die Menge an effektiv eingetragenem Ozon zu 100 % erreicht. Dies bedeutet, dass das als gasförmiges Ozon bei dem Ozoneinspeisepunkt 4 in den Hauptstrom gegebene Ozon in dem fünften Mischer 5e vollständig in dem Hauptstrom des Wassers transferiert wurde und abreagiert hat.

Es ist erkennbar, dass die Menge an Ozon, die für die Reaktion mit den ebenfalls im Wasser gelösten oxidierbaren Stoffen zur Verfügung steht, in der ersten Reaktionszone 6a nur zwischen 30 und 35 % liegt und deshalb kein erhöhter Überschuss an Ozon vorliegt. Die Bildung von unerwünschten Stoffen wie Bromat wird auf diese Weise gering gehalten. Dabei bleibt das Eintragsystem für Ozon mit nur einer Einspeisestelle 4 einfach und erfordert keine aufwändige Regelung, wie sie beispielweise bei mehreren Einspeisepunkten erforderlich ist.

### Bezugszeichen

- 1.: Rohr
- 2.: Zulauf
- 3.: Ablauf
- 4.: Ozoneinspeisepunkt
- 5a.: Mischelement
- 5b.: Mischelement
- 5c.: Mischelement
- 5d.: Mischelement
- 5e.: Mischelement
- 6a.: Reaktionszone
- 6b.: Reaktionszone
- 6c.: Reaktionszone
- 6d.: Reaktionszone
- 7.: Rohrbogen
- 8.: Auslass
- 10.: Bestrahlungsbereich
- 11.: Bestrahlungsbereich
- 12.: Messpunkt
- 13.: Messpunkt
- 14.: Reaktionszone 6a
- 15.: Messpunkt
- 16.: Reaktionszone 6b
- 17.: Messpunkt
- 18.: Reaktionszone 6c
- C.: Eintragseffizienz
- I.: Länge

## Patentansprüche

1. Vorrichtung zur Behandlung von Flüssigkeiten mittels Ozon, mit einem Rohr (1), in dem ein Hauptstrom der Flüssigkeit von einem Zulauf (2) zu einem Ablauf (3) in einer Stromrichtung geführt ist, mit einer Ozoneintragstelle (4), an der Ozon gasförmig in den Hauptstrom einbringbar ist, sowie mit wenigstens zwei stromabwärts der Ozoneintragstelle (4) liegenden Mischern (5a ... 5f), **dadurch gekennzeichnet, dass** die Einspeisung von Ozon in den Wasserstrom an genau einer Stelle vorgesehen ist, und dass die Mischer (5a ... 5f) in einem Abstand voneinander angeordnet sind, wobei zwischen den Mischern (5a ... 5f) wenigstens eine Reaktionszone (6a ... 6e), in der das gelöste Ozon mit den in der Flüssigkeit befindlichen Kontaminationen reagieren kann, ausgebildet ist und wobei der Abstand zwischen den Mischern (5a ... 5f) und die Fließgeschwindigkeit der Flüssigkeit so gewählt sind, dass die Verweilzeit für ein Wasservolumen zwischen dem Austritt aus einem Mischer und dem Eintritt in den nachfolgenden Mischer zwischen 0,5 Sekunden und 30 Sekunden, in einer der Reaktionszonen (6a...6e) beträgt, und dass die Mischer (5a ... 5f) so ausgebildet sind, dass sie jeweils nur einen Teil des gasförmig eingetragenen Ozons in dem Hauptstrom in Lösung bringen.

2. Vorrichtung nach Anspruch 1, **dadurch gekennzeichnet, dass** die Mischer jeweils statische Mischer ohne bewegliche Teile sind.

3. Vorrichtung nach einem der vorhergehenden Ansprüche, **dadurch gekennzeichnet, dass** die Verweilzeit für ein Wasservolumen zwischen dem Austritt aus einem Mischer und dem Eintritt in den nachfolgenden Mischer zwischen 1 Sekunde und 10 Sekunden in einer der Reaktionszonen (6a ...6e) beträgt.

4. Vorrichtung nach einem der vorhergehenden Ansprüche, **dadurch gekennzeichnet, dass** die Mischer (5a ... 5f) und die Reaktionszonen (6a ... 6e) in einem schlaufenartig gefalteten Rohr angeordnet sind.

5. Vorrichtung nach einem der vorhergehenden Ansprüche, **dadurch gekennzeichnet, dass** die Mischer (5a ... 5f) und die Reaktionszonen (6a ... 6e) in vertikaler Ausrichtung angeordnet sind.

6. Vorrichtung nach einem der vorhergehenden Ansprüche, **dadurch gekennzeichnet, dass** eine Einspeisung von Wasserstoffperoxid oder anderen Reagenzien vorgesehen ist.

7. Vorrichtung nach Anspruch 6, **dadurch gekennzeichnet, dass** die Einspeisung stromaufwärts der Ozoneinspeisestelle (4) vorgesehen ist.

8. Vorrichtung nach Anspruch 6, **dadurch gekennzeichnet, dass** die Einspeisung stromabwärts der Ozoneinspeisestelle (4) zwischen zwei Mischern (5a..5f) vorgesehen ist.

9. Vorrichtung nach einem der vorhergehenden Ansprüche, **dadurch gekennzeichnet, dass** zwischen wenigstens zwei Mischern (5a ... 5f) oder nach dem letzten Mischer (5a ... 5f) ein Bereich (10, 11) zur Einstrahlung von elektromagnetischen Wellen, insbesondere von UV-Strahlung vorgesehen ist.

10. Verfahren zur Behandlung von kontaminierten Flüssigkeiten in einem Strom mittels Ozon, **dadurch gekennzeichnet, dass** das Ozon an genau einer Stelle gasförmig in den Strom eingespeist wird und dann mittels in Stromrichtung aufeinander folgender Mischer (5a ... 5f) stufenweise in den Strom eingemischt wird, so dass sich die Konzentration des in dem Strom gelösten Ozons nach jedem Mischer erhöht bis eine Eintragseffizienz von mehr als 95% erreicht wird, wobei der Abstand zwischen den Mischern (5a ... 5f) und die Fließgeschwindigkeit der Flüssigkeit so gewählt sind, dass die Verweilzeit für ein Flüssigkeitsvolumen zwischen dem Austritt aus einem Mischer und dem Eintritt in den nachfolgenden Mischer zwischen 0,5 Sekunden und 30 Sekunden in einer der Reaktionszonen (6a ...6e) beträgt.

11. Verfahren nach Anspruch 10, **dadurch gekennzeiehnet**, dass die Verweilzeit für ein Flüssigkeitsvolumen zwischen dem Austritt aus einem Mischer und dem Eintritt in den nachfolgenden Mischer zwischen 1 und 10 Sekunden in einer der Reaktionszonen (6a ...6e) beträgt.

12. Verfahren nach einem der vorhergehenden Ansprüche 10 und 11, **dadurch gekennzeichnet, dass** eine Einspeisung von Wasserstoffperoxid oder anderen Reagenzien in die Flüssigkeit erfolgt.

13. Verfahren nach Anspruch 12, **dadurch gekennzeichnet, dass** die Einspeisung stromaufwärts der Ozoneinspeisestelle (4) erfolgt.

14. Verfahren nach Anspruch 12, **dadurch gekennzeichnet, dass** die Einspeisung stromabwärts der Ozoneinspeisestelle (4) erfolgt.

15. Verfahren nach Anspruch 14, **dadurch gekennzeichnet, dass** die Einspeisung in einer der Reaktionszonen (6a..6e) erfolgt.

16. Verfahren nach einem der Ansprüche 10-15, **dadurch gekennzeichnet, dass** zwischen wenigstens zwei Mischern oder nach dem letzten Mischer (5a..5f) eine Einstrahlung von elektromagnetischen Wellen, insbesondere von UV-Strahlung erfolgt.

## Claims

1. Device for treating liquids by means of ozone, having a pipe (1), in which a main stream of the liquid is conducted in a flow direction from an inlet (2) to an outlet (3), having an ozone entry point (4), at which ozone can be introduced in gaseous form into the main stream, and having at least two mixers (5a ... 5f) situated downstream of the ozone entry point (4), **characterised in that** the feed of ozone into the water stream is provided at exactly one point, and that the mixers (5a ... 5f) are arranged at a distance from each other, wherein at least one reaction zone (6a ... 6e), in which the dissolved ozone can react with the contamination in the liquid, is formed between the mixers (5a ... 5f), and wherein the distance between the mixers (5a ... 5f) and the flow speed of the liquid are selected such that the dwell time for a water volume in one of the reaction zones (6a ... 6e) between exiting one mixer and entering the next mixer is between 0.5 seconds and 30 seconds, and that the mixers (5a ... 5f) are formed in such a manner that they each dissolve only some of the ozone introduced in gaseous form in the main stream.

2. Device according to Claim 1, **characterised in that** the mixers are each static mixers without moving parts.

3. Device according to any one of the preceding claims, **characterised in that** the dwell time for a water volume in one of the reaction zones (6a ... 6e) between exiting one mixer and entering the next mixer is between 1 second and 10 seconds.

4. Device according to any one of the preceding claims, **characterised in that** the mixers (5a ... 5f) and the reaction zones (6a ... 6e) are arranged in a pipe that is folded in a loop-like manner.

5. Device according to any one of the preceding claims, **characterised in that** the mixers (5a ... 5f) and the reaction zones (6a ... 6e) are arranged in a vertical alignment.

6. Device according to any one of the preceding claims, **characterised in that** a feed of hydrogen peroxide or other reagents is provided.

7. Device according to Claim 6, **characterised in that** the feed is provided upstream of the ozone feed point (4).

8. Device according to Claim 6, **characterised in that** the feed is provided between two mixers (5a ... 5f) downstream of the ozone feed point (4).

9. Device according to any one of the preceding claims, **characterised in that** a region (10, 11) for the irradiation of electromagnetic waves, in particular UV radiation, is provided between at least two mixers (5a ... 5f) or downstream of the last mixer (5a ... 5f).

10. Method for treating contaminated liquids in a stream by means of ozone, **characterised in that** the ozone is fed into the stream in gaseous form at exactly one point and is then mixed into the stream in stages by means of mixers (5a ... 5f) arranged one after the other in the flow direction, so that the concentration of the ozone dissolved in the stream is increased after each mixer until a feed efficiency of more than 95% is reached, wherein the distance between the mixers (5a ... 5f) and the flow speed of the liquid is selected such that the dwell time for a liquid volume in one of the reaction zones (6a ... 6e) between exiting one mixer and entering the next mixer is between 0.5 seconds and 30 seconds.

11. Method according to Claim 10, **characterised in that** the dwell time for a liquid volume in one of the reaction zones (6a ... 6e) between exiting one mixer and entering the next mixer is between 1 and 10 seconds.

12. Method according to any one of the preceding Claims 10 and 11, **characterised in that** hydrogen peroxide or other reagents are fed into the liquid.

13. Method according to Claim 12, **characterised in that** the feed takes place upstream of the ozone feed point (4).

14. Method according to Claim 12, **characterised in that** the feed takes place downstream of the ozone feed point (4).

15. Method according to Claim 14, **characterised in that** the feed takes place in one of the reaction zones (6a ... 6e).

16. Method according to any one of Claims 10-15, **characterised in that** irradiation of electromagnetic waves, in particular UV radiation, takes place between at least two mixers or downstream of the last mixer (5a ... 5f).

## Revendications

1. Dispositif pour le traitement de liquides au moyen d'ozone, comprenant un tube (1), dans lequel un courant principal de liquide circule dans le sens de l'écoulement, en partant d'une entrée (2) vers une sortie (3), un point d'alimentation en ozone (4), auquel l'ozone peut être introduit, sous forme gazeuse, dans le courant principal, et au moins deux mélangeurs (5a...5f), situés en aval dudit point d'alimentation en ozone (4), **caractérisé en ce que** l'alimentation en ozone est prévue dans le courant d'eau à un point précis, et que les mélangeurs (5a...5f) sont disposés à distance l'un de l'autre, au moins une zone réactionnelle (6a...6e) étant formée entre les mélangeurs (5a...5f), dans laquelle l'ozone dissous peut réagir en contact avec les contaminations se trouvant dans le liquide, et où la distance entre les mélangeurs (5a ...5f) et la vitesse du liquide sont choisies de telle sorte que le temps de séjour pour un volume de liquide entre la sortie d'un mélangeur et l'entrée dans le mélangeur suivant s'élève entre 0,5 et 30 secondes dans une des zones réactionnelles, les mélangeurs (5a...5f) étant configurés de telle façon qu'ils ne solubilisent, respectivement, qu'une fraction de l'ozone introduit, sous forme gazeuse, dans le courant principal.

2. Dispositif selon la revendication 1, **caractérisé en ce que** les mélangeurs sont respectivement des mélangeurs statiques sans pièces mobiles.

3. Dispositif selon une des revendications précédentes, **caractérisé en ce que** le temps de séjour pour un volume d'eau entre la sortie d'un mélangeur et l'entrée dans le mélangeur suivant s'élève entre 1 et 10 secondes dans une des zones réactionnelles (6a ...6e).

4. Dispositif selon une des revendications précédentes, **caractérisé en ce que** les mélangeurs (5a ...5f) et les zones réactionnelles (6a ...6e) sont agencés dans un tube plié en boucle.

5. Dispositif selon une des revendications précédentes, **caractérisé en ce que** les mélangeurs (5a ...5f) et les zones réactionnelles (6a ...6e) sont agencés en une direction verticale.

6. Dispositif selon une des revendications précédentes, **caractérisé en ce que** l'on prévoit une alimentation de peroxyde d'hydrogène ou d'autres réactifs.

7. Dispositif selon la revendication 6, **caractérisé en ce que** l'alimentation est prévue en amont du point d'alimentation en ozone (4).

8. Dispositif selon la revendication 6, **caractérisé en ce que** l'alimentation est prévue en aval du point d'alimentation en ozone (4) entre deux mélangeurs (5a ...5f).

9. Dispositif selon une des revendications précédentes, **caractérisé en ce que** l'on prévoit entre au moins deux mélangeurs ou après le dernier mélangeur (5a ...5f) une zone (10, 11) pour l'irradiation d'ondes électromagnétiques, en particulier de rayons UV.

10. Procédé pour le traitement de liquides contaminés dans un courant au moyen d'ozone, **caractérisé en ce que** l'ozone est injecté à un endroit précis dans le courant sous forme gazeuse et par la suite il est mélangé progressivement au courant à l'aide des mélangeurs (5a ...5f) successifs en direction d'écoulement, de sorte que la concentration de l'ozone dissous dans le courant est augmentée après chaque mélangeur jusqu'à atteindre une efficacité d'entrée supérieure à 95 %, auquel cas la distance entre les mélangeurs (5a ... 5f) et la vitesse d'écoulement du liquide sont choisies de telle sorte que le temps de séjour pour un volume de liquide entre la sortie d'un mélangeur et l'entrée dans le mélangeur suivant s'élève entre 0,5 et 30 secondes dans une des zones réactionnelles (6a ...6e).

11. Procédé selon la revendication 10, **caractérisé en ce que** le temps de séjour pour un volume de liquide entre la sortie d'un mélangeur et l'entrée dans le mélangeur suivant s'élève entre 1 et 10 secondes dans une des zones réactionnelles (6a ...6e).

12. Procédé selon une des revendications précédentes 10 ou 11, **caractérisé en ce qu'**une alimentation de peroxyde d'hydrogène, ou d'autres réactifs, est acheminée dans le liquide.

13. Procédé selon la revendication 12, **caractérisé en ce que** l'alimentation a lieu en amont du point d'alimentation en ozone (4).

14. Procédé selon la revendication 12, **caractérisé en ce que** l'alimentation a lieu en aval du point d'alimentation en ozone (4).

15. Procédé selon la revendication 14, **caractérisé en ce que** l'alimentation a lieu dans une des zones réactionnelles (6a ...6e).

16. Procédé selon une des revendications précédentes de 10 à 15, **caractérisé en ce qu'**une irradiation d'ondes électromagnétiques, en particulier de rayons UV, a lieu entre au moins deux mélangeurs ou après le dernier mélangeur (5a ...5f).
